# DEMANDE DE BREVET EUROPEEN

(11) **EP 2 146 267 A1**
(43) Date de publication de la demande: **20.01.2010**
(21) Numéro de dépôt: 09305675.2
(22) Date de dépôt: 15.07.2009
(51) Int. Cl.: G06F 1/16

(54) **Dispositif personnel de partage**

(30) Priorité: 16.07.2008 FR 0854823; 14.04.2009 FR 0952437
(71) Demandeur: Leyio, 33170 Gradignan (FR)
(72) Inventeur: Maurel, Bruno, 33600 PESSAC (FR)
(74) Mandataire: Fantin, Laurent

(57) **Abrégé**

L'objet de l'invention est un dispositif personnel de partage de données d'un utilisateur, ledit dispositif comportant dans un boîtier (10) portable des moyens d'alimentation (12), des moyens d'interface (14) Homme/Machine comprenant des moyens de saisie (16) et des moyens d'affichage (18), des moyens de traitement (20) desdites données comprenant au moins un processeur (22) et une mémoire vive (24), des moyens de mémorisation (26) desdites données, et des moyens de partage (28) desdites données comprenant au moins des moyens de communication filaire (30) et des moyens de communication sans fil (32), le dispositif personnel de partage est **caractérisé en ce qu**'il comprend des moyens de détection (34) de mouvement permettant à l'utilisateur de déclencher intuitivement la communication de données par les moyens de partage (28).

## Description

La présente invention est relative à un dispositif personnel de partage.

De plus en plus, de nombreuses personnes cherchent à emmener leurs univers numériques dans la réalité.

L'univers numérique d'une personne est défini par toutes les données qu'il est susceptible de collecter dans la vie réelle ou par l'intermédiaire d'Internet.

Par donnée, on entend des fichiers relatifs à différents contenus : de la musique, de la vidéo, des photos, des documents de travail, ... , ainsi que toutes les informations telles que des liens Internet, des renseignements relatifs à un utilisateur d'un outil de communication par Internet, comme par exemple la carte de visite d'un utilisateur d'un logiciel de messagerie instantanée ou les renseignements contenus dans le profil d'un utilisateur d'un site communautaire, ou simplement l'appartenance d'un utilisateur à un quelconque réseau virtuel.

Le développement d'Internet et son attrait grandissant depuis les possibilités d'interaction sur son contenu dues à l'approche Web 2.0 font que les utilisateurs souhaitent de plus en plus rapprocher leurs expériences numériques de leur vie réelle.

D'une part, Internet est une source d'informations de plus en plus utilisée pour se renseigner et s'enrichir sur tous les sujets, notamment grâce aux moteurs de recherche et aux flux d'informations pour les actualités.

D'autre part, les utilisateurs d'Internet accèdent à des outils de plus en plus performants pour communiquer et faire des rencontres : logiciel de messagerie instantanée, visioconférence, sites communautaires, ...

Grâce à ces différents outils de communication, les utilisateurs d'Internet peuvent recevoir, envoyer des messages, s'afficher dans une communauté virtuelle et donc échanger des données.

Au travers des logiciels de messagerie instantanée et des réseaux sociaux se développant au travers de sites communautaires, toutes les sphères de la vie des utilisateurs d'Internet sont touchées : des simples relations amicales aux prises de contacts professionnels, des renseignements pratiques à la culture ou à la vie sentimentale, ...

Ainsi, en effectuant des recherches sur Internet, en s'affichant dans une communauté virtuelle, en s'y exprimant et en interagissant avec d'autres utilisateurs, que ce soit avec sa véritable identité ou avec une autre identité d'ailleurs, l'utilisateur de ces nouveaux outils de communication multiplie les rencontres et développe ses différents réseaux.

Bien entendu, les rencontres et les échanges virtuels peuvent déboucher sur des rencontres et sur la création de réseaux sociaux dans la vie réelle.

Par conséquent, les utilisateurs d'Internet pouvant facilement multiplier les rencontres et développer leurs différents réseaux, dans leur univers numérique ou dans la vie réelle, le nombre d'échanges de données entre ces utilisateurs augmente.

En parallèle au développement d'Internet, on assiste aussi actuellement à une augmentation des fichiers créés, stockés et lus par différents dispositifs numériques : photos ou vidéos prises avec un appareil ou une caméra numérique, agenda tenu avec un organiseur, ou PDA, fichiers informatiques de travail, contacts et carnets d'adresses sur un téléphone portable, fichiers musicaux ou vidéos sur divers lecteurs portables, ...

Les utilisateurs d'Internet et de ces dispositifs numériques, et d'autant plus les nouvelles générations, cherchent de plus en plus à conserver ces données d'origines diverses pour les partager de nouveau dans la vie réelle et sur tous types de support permettant des échanges : CD, DVD, Disques durs portables, clé USB, carte mémoire, ... Cependant, par Internet comme dans la vie réelle, les échanges de données restent limités car la plupart des différents outils de communication et des différents supports d'échange nécessitent une émission et/ou une réception des informations et des fichiers par l'intermédiaire d'un ordinateur.

De plus, les fichiers susceptibles d'être échangés et mis à disposition par des utilisateurs, qu'ils soient transférés par l'intermédiaire d'un outil de communication ou créés par un dispositif numérique, sont de plus en plus volumineux à stocker et donc longs à transmettre.

Bien que certains téléphones mobiles soient susceptibles de permettre la communication d'informations et l'échange de fichiers directement entre deux appareils dans la vie réelle, les transmissions de fichiers demeurent longues et compliquées à mettre en oeuvre et les débits des échanges restent limités en regard des capacités des connexions Internet accessibles depuis un ordinateur. Autant d'un point de vue personnel que professionnel, il devient de plus en plus attrayant et utile de s'identifier simplement auprès des membres d'un réseau social, qu'il soit virtuel ou réel, et de pouvoir interagir dans la réalité avec ses membres en partageant facilement, rapidement et de manière sécurisée diverses informations ou fichiers.

Aussi, c'est un objet de la présente invention de palier les inconvénients des dispositifs de l'art antérieur en proposant un dispositif permettant à un utilisateur d'emmener et de partager son univers numérique, qu'il soit personnel et/ou professionnel, dans la réalité, et ceci de façon rapide, intuitive, et sécurisée, et surtout sans l'intermédiaire d'un ordinateur ou d'un autre appareil portable.

A cet effet, l'invention a pour objet un dispositif personnel de partage de données d'un utilisateur, ledit dispositif comportant dans un boîtier portable des moyens d'alimentation, des moyens d'interface Homme/Machine comprenant des moyens de saisie et des moyens d'affichage, des moyens de traitement desdites données comprenant au moins un processeur et une mémoire vive, des moyens de mémorisation desdites données, et des moyens de partage desdites données comprenant des moyens de communication filaire et des moyens de communication sans fil, le dispositif personnel de partage est **caractérisé en ce qu**'il comprend des moyens de détection de mouvement permettant à l'utilisateur de déclencher intuitivement la communication de données par les moyens de partage.

Le dispositif personnel de partage selon l'invention a pour but de permettre à un utilisateur de pouvoir emmener avec lui son univers numérique personnel, c'est-à-dire toutes les données qu'il est susceptible de collecter dans la vie réelle ou par l'intermédiaire d'Internet, en toute sécurité afin de pouvoir le partager de façon instantanée, simple et intuitive, à tout moment dans sa vie quotidienne et en particulier dans les instants où il ne dispose pas d'un ordinateur.

Il est rappelé que par donnée, on entend des fichiers relatifs à des contenus tels que de la musique, de la vidéo, des photos, des documents de travail, ... et des informations telles que des liens Internet, des renseignements relatifs à un utilisateur d'un outil de communication par Internet, comme par exemple la carte de visite d'un utilisateur d'un logiciel de messagerie instantanée ou les renseignements contenus dans le profil d'un utilisateur d'un site communautaire, ou simplement l'appartenance d'un utilisateur à un quelconque réseau virtuel. L'invention est maintenant décrite selon un mode de réalisation particulier, non limitatif, en regard des dessins annexés, dessins sur lesquels les différentes figures représentent :

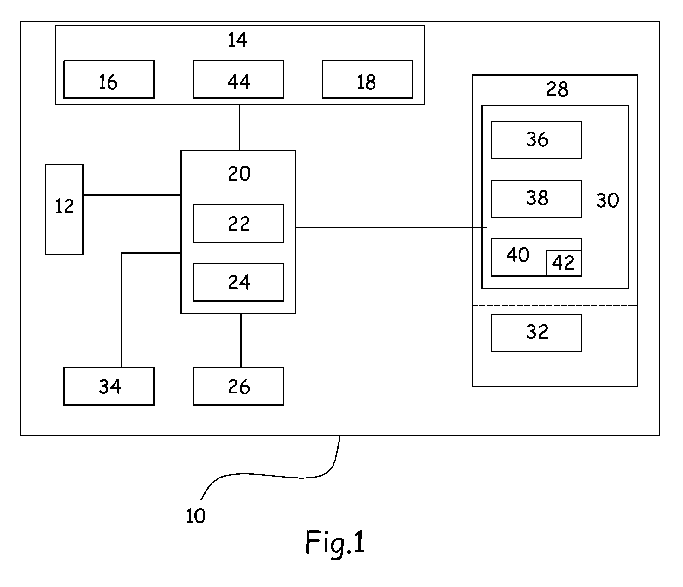

- figure 1 : une représentation schématique du dispositif selon l'invention avec ses fonctionnalités,
- figures 2 et 3 : des représentations schématiques des enregistrements des mouvements de déclenchement.

Afin d'être conçu comme un objet mobile et disponible lorsqu'on en a besoin, le dispositif selon l'invention, comporte dans un boîtier 10 portable, des moyens d'alimentation 12 lui permettant d'être autonome sur une longue durée, notamment grâce à une très faible consommation en mode veille, afin de pouvoir être utilisé par l'utilisateur dans tous les instants de sa vie.

Afin de permettre à l'utilisateur d'emmener, de consulter et de gérer ses données, le dispositif personnel de partage selon l'invention comprend des moyens d'interface 14 Homme/Machine comprenant des moyens de saisie 16 et des moyens d'affichage 18, des moyens de traitement 20 desdites données comprenant au moins un processeur 22 et une mémoire vive 24, et des moyens de mémorisation 26 desdites données.

Afin de permettre les échanges de données, le dispositif selon l'invention comprend des moyens de partage 28 desdites données comprenant des moyens de communication filaire 30 et des moyens de communication sans fil 32.

Afin de faciliter lesdits échanges de données, le dispositif personnel de partage comprend des moyens de détection 34 de mouvement permettant à l'utilisateur de déclencher intuitivement la communication de données par lesdits moyens de partage 28.

Le dispositif personnel de partage et son procédé de mise en oeuvre vont maintenant être décrits selon un mode de réalisation préféré de l'invention.

Bien entendu, les caractéristiques de ce mode de réalisation et les applications données à titre d'exemple pour illustrer la description ne sont aucunement limitatives des possibilités de l'invention.

Ainsi, dans un mode de réalisation préféré de l'invention, les moyens de mémorisation 26 des données ont une capacité d'au moins 8 gigaoctets afin de permettre le stockage de plusieurs fichiers conséquents comme des vidéos.

Cependant, dans un mode de réalisation correspondant à une utilisation du dispositif avec d'autres types de données moins volumineuses, les moyens de mémorisation peuvent aussi avoir une capacité inférieure à 8 gigaoctets.

Afin de permettre à deux utilisateurs du dispositif selon l'invention d'échanger leurs données de manière instantanée et rapide, les moyens de partage 28 autorisent des échanges de données à un débit au moins égal à 5 mégaoctets par seconde et le processeur 22 des moyens de traitement 20 possède une forte puissance, d'au moins 250 millions d'instructions par seconde pour donner un ordre d'idées, afin de supporter ledit débit.

Pour donner un ordre de grandeur de la vitesse d'échange offerte par les moyens de partage 28, une photo haute définition de 2 mégaoctets est transmise en 0,25 seconde et une vidéo de vacances de 80 mégaoctets l'est en 10 secondes. De plus, afin de permettre des échanges de données entre un dispositif selon l'invention et un autre dispositif selon l'invention, l'ordinateur personnel de l'utilisateur, ou un moyen de stockage externe tel une clé USB, les moyens de communication filaire 30 comprennent au moins un premier port USB 36 pour le raccordement à un ordinateur ainsi qu'au moins un deuxième port USB 38 pour le raccordement à un autre dispositif selon l'invention ou à d'autres moyens externes de stockage de données tels une clé USB.

Avantageusement, en le raccordant à un ordinateur ou à une source d'alimentation adaptée, ledit premier port USB 36 permet aussi la mise en charge des moyens d'alimentation 12.

Les moyens de communication sans fil 32 utilisent une technologie radio courte distance, de quelques mètres pour donner un ordre d'idées, permettant de traverser les obstacles et autorisant un débit au moins égal à 5 mégaoctets par seconde.

A titre indicatif, les moyens de communication sans fil 32 utilisent une technologie radio « ultra wideband » fournissant des taux de transferts très élevés sur des distances relativement courtes et à faible puissance.

Lors d'une connexion entre deux dispositifs personnels de partage selon l'invention, et comme précisé auparavant, des moyens de détection 34 de mouvement permettent à l'utilisateur de déclencher intuitivement la communication de données par lesdits moyens de partage 28.

Plus précisément, la transmission de données par les moyens de communication sans fil 32 est déclenchée par les moyens de détection 34 de mouvement lors d'un bref déplacement du dispositif par l'utilisateur.

Ainsi, lors de la rencontre entre deux utilisateurs du dispositif selon l'invention, un des utilisateurs déclenche l'envoi de données de façon naturelle, tout comme pour la gestuelle humaine associée au mouvement de donner, c'est-à-dire en effectuant un geste de la main partant de lui en direction de l'autre utilisateur à qui il veut envoyer des données.

On constate en effet que ce geste particulier mais commun à tous les humains, est particulier, car il est rapide et reproductible.

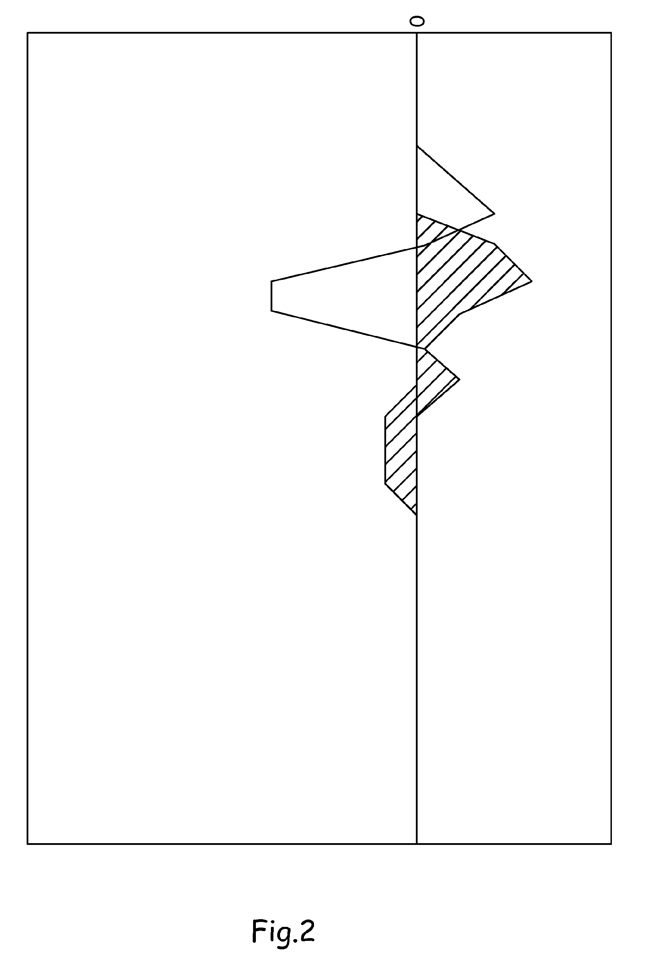

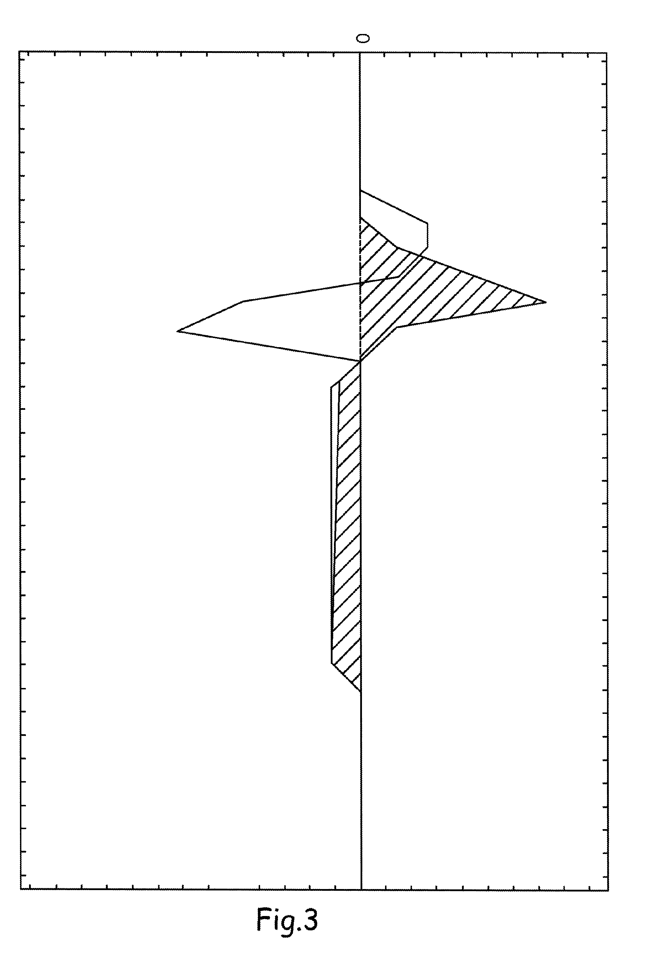

On constate sur les courbes des figures 2 et 3 que le geste consiste en un mouvement aller et retour du poignet, les surfaces correspondant à cet aller et ce retour sont d'une surface équivalente, ceci pour des droitiers comme pour des gauchers. Ainsi la surface au-dessus de la ligne neutre référencée 0 et la surface située en dessous sont sensiblement identiques.

Ceci est parfaitement discriminant pour constituer un déclenchement.

En effet, lors des mouvements de dispositif contenu dans un sac, dans la poche d'un utilisateur, soit le mouvement est lent, soit il n'y a pas cette symétrie.

De ce fait, on enregistre un ensemble de courbes à partir de tests pour définir un gabarit pré-établi pour les droitiers et les gauchers.

Ces gabarits sont établis à partir d'enregistrements des données accélérométriques, courbes des figures 2 et 3, puis à l'aide de ces motion-captures, un gabarit moyen est établi.

Ensuite, ce gabarit est affiné par une fonction du type recuit-simulé, pour minimiser l'erreur maximum, c'est-à-dire l'écart du gabarit de l'ensemble des évènements acquis par motion capture.

Pour le déclenchement, de façon préférentielle, on enregistre les données accélérométriques à une fréquence de 100 Hz, sur les trois axes avec une dynamique minimum de +/- 2,5 g sur chaque axe.

Un algorithme permet de discriminer les mesures pour fonctionner à 25 Hz en considérant uniquement les deux axes X et Y qui constituent un plan horizontal. Le troisième axe est éventuellement utilisé pour améliorer le rejet des faux mouvements.

Ces données accélérométriques acquises par le dispositif sont placées dans une fenêtre glissante, implémentée sous la forme d'un buffer circulaire, pour pouvoir être comparées aux gabarits pré-établis.

Afin de permettre à un utilisateur du dispositif personnel de partage d'échanger des données avec une personne ne disposant pas dudit dispositif, les moyens de partage 28 comprennent au moins un troisième port USB 40 pour le raccordement d'au moins une navette interne 42 de stockage de données extractible et connectable à un ordinateur.

Bien entendu, ladite navette interne 42 peut aussi être utilisée pour échanger des données avec un autre utilisateur possédant lui aussi le dispositif selon l'invention.

Dans le mode de réalisation préféré, ladite navette interne 42 de stockage prend la forme d'une clé USB d'une capacité d'au moins 1 gigaoctets et ladite navette interne 42 est intégrée au dispositif grâce à un logement de réception prévu dans le boîtier 10.

Ainsi, lorsque l'utilisateur désire partager certaines de ses données avec un tiers disposant d'un ordinateur, il sélectionne grâce aux moyens d'interface 14 Homme/Machine les données qu'il veut transmettre, lesdites données concernées étant transférées dans la mémoire de la navette interne 42, et il extrait ensuite sa navette interne 42 pour la donner au tiers à la manière d'une clé USB. De cette manière, le tiers ne voit que les données que l'utilisateur souhaite partager. La synchronisation des données entre ladite navette interne 42 et les moyens de mémorisation 26 du dispositif n'est pas décrite car elle est susceptible d'être gérée selon différentes règles par les moyens de traitement 20 et selon les choix des concepteurs ou de l'utilisateur.

L'utilisation de la navette interne 42 comme moyen d'échange de données est aussi un moyen de protection de l'accès aux données de l'utilisateur, cette navette interne 42 lui permet de partager des données sans qu'un tiers ne puisse accéder à toutes ses données personnelles.

Afin d'assurer une sécurité plus globale vis-à-vis des données personnelles de l'utilisateur contenues dans le dispositif selon l'invention, notamment en cas de vol, les moyens d'interface 14 Homme/Machine comprennent des moyens de protection de l'accès aux données de l'utilisateur prenant la forme de moyens d'acquisition 44 d'empreinte digitale, l'allumage ou l'activation du dispositif après un arrêt ou une mise en veille étant obligatoirement soumis au contrôle d'empreinte.

Avantageusement, les moyens d'acquisition 44 d'empreinte digitale sont utilisés pour assurer la fonction de moyens de navigation, c'est-à-dire déplacer la sélection dans les direction Haut, Bas, Gauche et Droite, dans les menus de l'interface Homme/Machine, ladite interface se présentant graphiquement sous la forme d'icônes et de vignettes avec un mode de parcours de type « arbre ». Les moyens de saisie 16 prennent la forme de touches et les moyens d'affichage 18 consistent en un écran couleur.

Enfin, les moyens d'alimentation 12 et leur gestion par les moyens de traitement 20 privilégient l'autonomie en sommeil profond, 6 mois pour donner un ordre d'idées, à l'autonomie lors d'un usage en continu du dispositif, soit à peu près 1 heure, qui ne correspond pas à l'utilisation d'un tel dispositif.

Pour donner un ordre d'idées, les moyens d'alimentation 12 permettent l'échange d'environ 20 gigaoctets de données étalé sur une durée d'un mois pour une utilisation typique d'un tel dispositif personnel de partage de données.

Bien entendu, l'invention couvre toutes les applications et toutes les variantes pouvant être réalisées et imaginées à partir de la description ci-dessus.

## Revendications

1. Dispositif personnel de partage de données d'un utilisateur, ledit dispositif comportant dans un boîtier (10) portable des moyens d'alimentation (12), des moyens d'interface (14) Homme/Machine comprenant des moyens de saisie (16) et des moyens d'affichage (18), des moyens de traitement (20) desdites données comprenant au moins un processeur (22) et une mémoire vive (24), des moyens de mémorisation (26) desdites données, et des moyens de partage (28) desdites données comprenant au moins des moyens de communication filaire (30) et des moyens de communication sans fil (32), le dispositif personnel de partage est **caractérisé en ce qu'**il comprend des moyens de détection (34) de mouvement permettant à l'utilisateur de déclencher intuitivement la communication de données par les moyens de partage (28).

2. Dispositif personnel de partage de données d'un utilisateur selon la revendication 1, **caractérisé en ce que** la transmission de données par les moyens de communication sans fil (32) est déclenchée par les moyens de détection (34) de mouvement lors d'un bref déplacement du dispositif par l'utilisateur.

3. Dispositif personnel de partage de données d'un utilisateur selon la revendication 1 ou 2, **caractérisé en ce que** le bref déplacement du dispositif par l'utilisateur est celui du don de la main, ledit dispositif étant tenu dans cette main.

4. Dispositif personnel de partage de données d'un utilisateur selon la revendication 3, **caractérisé en ce que** le mouvement du don constitue un mouvement aller/retour de la main tenant le dispositif.

5. Dispositif personnel de partage de données d'un utilisateur selon la revendication 4, **caractérisé en ce que** les surfaces à l'enregistrement des mouvements aller/retour sont équivalentes.

6. Dispositif personnel de partage de données d'un utilisateur selon l'une quelconque des revendications précédentes, **caractérisé en ce que** les moyens de partage (28) autorisent des échanges de données à un débit au moins égal à 5 mégaoctets par seconde.

7. Dispositif personnel de partage de données d'un utilisateur selon l'une quelconque des revendications précédentes, **caractérisé en ce que** les moyens de partage (28) du dispositif comprennent au moins une navette interne (42) de stockage de données extractible et connectable à un autre dispositif personnel de partage ou un ordinateur.

8. Dispositif personnel de partage de données d'un utilisateur selon la revendication 7, **caractérisé en ce que** la navette interne (42) de stockage prend la forme d'une clé USB intégrée au dispositif et **en ce que** les moyens de communication filaire (30) comprennent au moins un premier port USB (36) pour le raccordement dudit dispositif à un ordinateur et/ou pour la mise en charge de ces moyens d'alimentation (12) ainsi qu'au moins un deuxième port USB (38) pour la connexion de moyens externes de stockage de données tels une clé USB.

9. Dispositif personnel de partage de données d'un utilisateur selon l'une quelconque des revendications précédentes, **caractérisé en ce que** les moyens d'interface (14) Homme/Machine comprennent des moyens de protection de l'accès aux données de l'utilisateur.

10. Dispositif personnel de partage de données d'un utilisateur selon la revendication 9, **caractérisé en ce que** les moyens de protection de l'accès aux données de l'utilisateur prennent la forme de moyens d'acquisition (44) d'empreinte digitale.

11. Dispositif personnel de partage de données d'un utilisateur selon l'une quelconque des revendications précédentes, **caractérisé en ce que** des moyens d'acquisition (44) d'empreinte digitale assurent la fonction de moyens de navigation de l'interface Homme/Machine.
